# EUROPEAN PATENT SPECIFICATION

(11) **EP 2 235 854 B1**
(45) Date of publication and mention of the grant of the patent: **05.08.2015**
(21) Application number: 07852067.3
(22) Date of filing: 29.11.2007
(51) Int. Cl.: H04B 10/50, G02B 6/42

(54) **ADAPTER, ARRANGEMENT AND METHOD**
ADAPTER, ANORDNUNG UND VERFAHREN
ADAPTATEUR, DISPOSITIF ET PROCÉDÉ

(43) Date of publication of application: 06.10.2010
(73) Proprietor: Telefonaktiebolaget LM Ericsson (publ), 164 83 Stockholm (SE)
(72) Inventor: DAHLFORT, Stefan, S-187 68 Täby (SE)
(74) Representative: Valea AB
(86) International application number: PCT/SE2007/001059
(87) International publication number: WO 2009/070062

(56) References cited:
- WO-A1-2004/010755
- WO-A1-2004/010755
- US-A1- 2004 081 465
- US-A1- 2004 081 465
- US-A1- 2007 010 132
- US-A1- 2007 010 132

## Description

### TECHNICAL FIELD

The present invention concerns an adapter and an arrangement comprising an adapter for use in a telecommunications network, such as an Ethernet network. The method also concerns a method for allowing a user to transform at least one power port, such as a power-over-Ethernet (PoE) port of an Ethernet switch, or at least one electric signal input/output port of a telecommunications network switch, into at least one optic port.

### BACKGROUND OF THE INVENTION

A telecommunications network is a network of telecommunications links and nodes arranged so that messages may be passed from one part of the network to another over multiple links and through various nodes. The Ethernet is, for example, a family of frame-based computer networking technologies for local area networks (LANs). Ethernet networks use twisted-pair cables or fibre optics to connect network devices to a common medium that provides a path along which electric signals can travel. Such telecommunications networks can transmit data at transfer rates of up to 10 gigabits per second (Gbps).

Switches are used to connect network segments and comprise either electric ports for the input/output of electric signals, optic ports for the input/output of optic signals, or a combination of both electric and optic ports. Most electric ports are arranged to receive a standardized registered jack, such as an RJ45 (i.e. a standardized physical interface for connecting telecommunications equipment or computer networking equipment). Many switches also comprise power ports that can be used to transmit electric power, along with data, to remote devices over standard electric cables.

If an optic port is required when using a switch comprising only electric ports, a fibre converter is usually connected, via an RJ45 cable for example, to an electric port of the switch. A fibre converter contains an optic transceiver that converts optic signals into electric signals and vice versa, and it must be supplied with electric power in order to function. Connecting a fibre converter to a switch therefore increases the cost, complexity, installation time and space requirements of a telecommunications network switch system. Alternatively, telecommunications network switches comprising an optic port may be used although such switches are more expensive than switches that comprise only electric ports (with or without the power function).

WO 2004/010755 discloses a media wall converter housing that fits into an existing faceplate of a wall outlet. The converter has a front section for housing converter circuitry and a rear section for housing optical components. The rear section of the adapter housing resides behind the faceplate while the front section of the housing extends into a work area from the faceplate.

US 2004/0081465 concerns a system and method for supplying driving power to media converters for optical communication, which can realize a communication system employing a simple circuit construction at a minimal expense even in the case where the communication system includes a plurality of media converters. Each media converter converts an interface of an electrical-communication device to an interface of an optical-communication device and converts the interface of the optical-communication device to the interface of the electrical-communication device. The system includes: a power-supply device constructed independently from the media converters: and, at least one power-supply socket device to supply power from the power-supply device to the media converters.

US 2007/010132 describes media converters for use in optical-to-electrical and electrical-to-optical conversion. A media converter includes an outer housing, an electrical plug disposed on one end of the outer housing, an optical cable disposed on an opposite end of the outer housing, and circuitry that connects to both the electrical plug and the optical cable. The circuitry receives electrical signals from the electrical plug and outputs corresponding optical signals to the optical cable. In addition, the circuitry also receives optical signals from the optical cable and outputs corresponding electrical signals to the electrical plug.

### SUMMARY OF THE INVENTION

An object of the present invention is to provide a means for enabling a telecommunications network switch having no optic ports to be fed with an optical signal in a rational manner.

This object is achieved by an adapter that comprises: at least one first connector for connecting at least one optic transceiver to the adapter and at least one second connector for directly connecting the adapter to at least one power port of a telecommunications network switch, such as a power-over-Ethernet (PoE) port of an Ethernet switch or a Power over LAN (PoL) port or an Inline Power port. As used in this document, the expression "directly" meaning without the use of an electric conductor/cable, such as an RJ45 and its associated wiring. The adapter comprises first circuitry arranged to enable electric signals to be transmitted between the at least one optic transceiver and the at least one power port. The adapter also comprises second circuitry arranged to enable electric power to be drawn from at least one power port of the telecommunications network switch to enable power to be supplied to the at least one optic transceiver. The adapter is thereby arranged to enable electric signals to be transmitted therethrough while electric power is simultaneously fed to the optical transceiver and/or any parts of the adapter's circuitry requiring electric power. The at least one second connector is arranged to releasably directly connect the adapter to the at least one power port of a telecommunications network switch.

The invention is based on the realisation that a telecommunications switch having no optic ports may be fed with an optical signal using such an adapter. When at least one optic transceiver has been connected to the adapter and power from at least one power port of the telecommunications network switch has been supplied to the at least one optic transceiver, electric signals may be transmitted between the at least one optic transceiver and the telecommunications network switch via the adapter. The at least one (electric) power port is thereby transformed into at least one optic port.

By drawing power for an optic transceiver from a power port, no external power source is necessary to power the optic transceiver, which reduces cost, complexity, installation time and space requirements. However, the adapter may be connected to an external power supply to draw power therefrom instead of, or in addition to drawing power from a power port of the telecommunications network switch, if desired.

The second circuitry to draw electric power from the at least one power port of the telecommunications network may of course be (at least partly) by-passed, or omitted from the adapter altogether, if an external power supply is used to power the at least one optic transceiver (i.e. an external power source may be connected directly to the optic transceiver or it may be connected to the optic transceiver via the adapter). In such cases, the adapter according to the invention functions solely as an attachment to enable the output of at least one optic transceiver to be quickly and easily connected directly to at least one port of a telecommunications network switch (i.e. an electric power port or an electric signal input/output port).

According to an embodiment of the invention the at least one power port is a registered jack port, such as an RJ 11, RJ 14 or RJ45 port.

According to another embodiment of the invention the at least one first connector is arranged to releasably connect the at least one optic transceiver to the adapter.

The adapter may comprise a plurality of different first and/or second connectors in order to enable the adapter to be connected to a plurality of different optic transceivers and/or a plurality of different power ports.

According to an embodiment of the invention the at least one first connecter is arranged for connecting at least one optic transceiver in the form of a Gigabit Interface Converter (GBIC) or a Small-Form factor-Pluggable (SFP) module to the adapter. Such optic transceivers offer high speed data transfer (1 Gbps and higher) and physical compactness and they can be removed and replaced without damaging or disturbing the rest of the system that comprises the GBIC or SFP.

According to another embodiment of the invention the adapter comprises at least one indicator to indicate the presence of an optic signal in the at least one optic transceiver, once at least one optic transceiver has been connected to the adapter. Additionally or alternatively, the adaptor comprises at least one indicator to indicate the status/operation of the adapter. The at least one indicator may comprise at least one light emitting diode (LED) and/or an acoustic/vibration alarm and/or means to provide information concerning the status/operation of the adapter to a user, control system or database.

According to a further embodiment of the invention the first circuitry is arranged to process or modulate electric signals that are transmitted therethrough, for example to de-noise or vary the amplitude, frequency, or phase of the electric signals. If electric power is required to power such first circuitry, it may be drawn from a power port of the communications network switch.

According to an embodiment of the invention the adapter comprises a plurality of first connectors for connecting a plurality of optic transceivers to the adapter and/or a plurality of second connectors for directly connecting the adapter to a plurality of power ports. A single adapter may therefore be arranged to be connected to a plurality of power ports of a telecommunications network switch and/or a plurality of optic transceivers. Furthermore, the adaptor may be connected to the power ports of a plurality of different communications network switches, one adapter may for example be connected between two or more communications network switches. This is advantageous since it, for example, allows ten power ports with a data transfer rate of 1 Gbit/s each to be multiplexed in the adapter and output as a 10 Gbit/s optical signal.

According to another embodiment of the invention the adapter comprises first circuitry to transmit a signal from one power port of a telecommunications network switch to a plurality of optic transceivers and/or first circuitry to transmit a signal from one optic transceiver to a plurality of power ports of a telecommunications network switch. In this way an output signal from one power port of a telecommunications network switch may be transmitted/multi-casted/broadcasted through a plurality of channels, for example. According to an embodiment of the invention the adapter comprises means to enable a user to connect/disconnect various power paths through the adapter so that he/she can, for example, decide which of a plurality of optic transceivers should be supplied with power.

According to an embodiment of the invention an adapter's first circuitry may comprise means, such as switches, to allow a user to select how signals are to be transmitted through the adapter so that one adapter may be used for a plurality of different applications. Such means may be arranged to be manoeuvred manually or remotely. First circuitry may for example be connected/disconnected by sending a control signal to the means that allow a user to select how signals are to be transmitted through the adapter.

According to an embodiment of the invention the adapter is arranged to accommodate the at least part of the at least one optic transceiver inside the adapter. An optic transceiver, such as an SFP, may for example be connected to an adapter that contains an Ethernet transceiver to convert an electric signal from an Ethernet switch to an electrical signal suitable for the SFP.

The present invention also concerns an arrangement for use in a telecommunications network, such as an Ethernet network, whereby the arrangement comprises an adapter according to any of the embodiments of the invention to which at least one optic transceiver, such as a Gigabit Interface Converter (GBIC) or a Small-Form factor-Pluggable (SFP) module, is releasably or non-releasably connected.

The present invention also concerns a method for allowing a user to transform at least one power port of a telecommunications network switch, such as a power-over-Ethernet (PoE) port of an Ethernet switch, into at least one optic port. The method comprises the step of connecting at least one adapter according to any of the embodiments of the invention or at least one arrangement according any of the embodiments of the invention to at least one power port of a telecommunications network switch.

The present invention further concerns a method for allowing a user to transform at least one electric signal input/output port (i.e. an electric port that is not also a power port) of a telecommunications network switch into at least one optic signal input/output port. The method comprises the step of connecting at least one adapter according to any of the embodiments of the invention, or at least one arrangement according any of the embodiments of the invention, to at least one electric signal input/output port of a telecommunications network switch.

The adapter, arrangement and methods according to the present invention are intended for use particularly, but not exclusively, in an Ethernet network. The Ethernet is standardized as IEEE 802.3, which is a collection of IEEE standards defining the physical layer, and the media access control (MAC) sublayer of the data link layer of the wired Ethernet. This is generally a local area network (LAN) technology with some wide area network (WAN) applications in which physical connections are made between nodes and/or infrastructure devices, such as hubs, switches, routers, by various types of electric conductor, such as copper wire, or optic fibre cable. It should however be noted that the adapter, arrangement and methods according to the present invention are however suitable for use in any type of telecommunications network, such as a computer network, the Internet, the Public Switched Telephone Network or an air traffic control network.

### BRIEF DESCRIPTION OF THE DRAWINGS

The present invention will hereinafter be further explained by means of non-limiting examples with reference to the appended figures where;
- Figure 1: schematically shows a commercially available telecommunications network switch, and
- Figures 2-4: schematically show adapters according to different embodiments of the invention,

It should be noted that the drawings have not been drawn to scale and that the dimensions of certain features have been exaggerated for the sake of clarity.

### DETAILED DESCRIPTION OF EMBODIMENTS

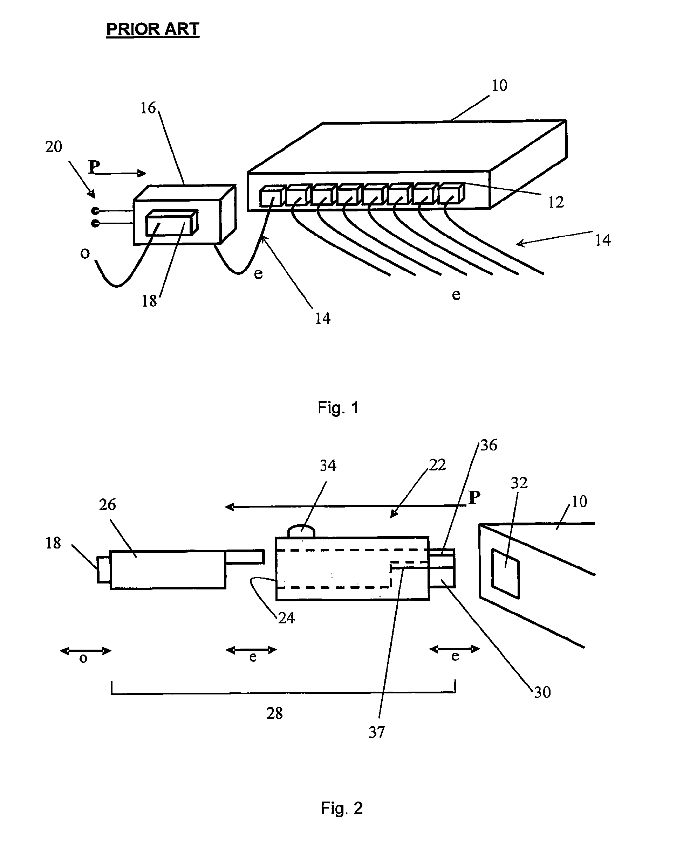

Figure 1 shows a commercially available Ethernet switch 10 comprising a plurality of electric ports 12. A plurality of electric conductors 14, such as RJ45s and their wiring, are connected to transmit electric signals (e) to and/or from the Ethernet switch 10 via the electric ports 12.

A fibre converter 16 is connected to the outermost electric port on the left-hand side of the Ethernet switch 10 illustrated in figure 1, via an RJ45 cable 14 for example. The fibre converter 16 contains an optic transceiver to convert optic signals (o) from a telecommunications network node or device, such as an IP telephone, camera, embedded computer, hub, switch or router into electric signals (e) and vice versa. The fibre converter 16 comprises an optic port 18 for the input/output of optic signals (o) and it must be supplied with electric power P from an external power source 20.

Figure 2 shows an adapter 22 according to an embodiment of the invention. The adapter 22 comprises a first connector 24 for releasably connecting an optic transceiver 26, such as a Small-Form factor-Pluggable (SFP) module, to the adapter 22. The adapter 22 and optic transceiver 26 may however example non-releasably connected together and provided as a unitary arrangement 28.

The adapter 22 also comprises a second connector 30 for releasably or non-releasably directly connecting the adapter 22 (or the arrangement 28) to a power port 32, of a telecommunications network switch 10, such as a RJ45 power-over-Ethernet (PoE) port of an Ethernet switch. The adapter 22 comprises shielded or non-shielded first circuitry 36 arranged to enable electric signals to be transmitted between the optic transceiver 26 and the power port 32. The adapter 22 also comprises second circuitry 37 to draw power (P) from the power port 32 of the telecommunications network switch 10, to enable power to be supplied to the optic transceiver 26.

The adapter 22 may comprise any electrically insulating flexible or non-flexible material such as glass fibre, a plastic, a prepreg (i.e. a combination of glass fibre mat, non-woven material and resin), a polyimide, Teflon^{®} or a ceramic. The adapter may be of any shape and size, depending on the application. It should be noted that the adapter 22 need not necessarily be constituted of a single component, but it may for example be constructed from a plurality of components that are selectively connected together to form the adapter 22. Such a multi-component adapter structure enables a user to easily modify an adapter's first an/or second circuitry.

The adaptor 22 may for example comprise a metallic or plastic housing and at least one first connector 24 for connecting at least one optic transceiver 26 to the adapter 22 and at least one second connector 30 for directly connecting the adapter 22 to at least one PoE power port 32 of an Ethernet switch 10. The first and second connectors 24 and 30 may be arranged on a printed circuit board comprising the first circuitry 36 of the adapter 22. The first circuitry 34 may comprise an Ethernet transceiver circuit to convert an electric signal from the Ethernet switch 10 into an electric signal suitable for the optic transceiver 26. The printed circuit board may also comprise a (DC/DC) voltage converter arranged to convert a 48V PoE power supply into the typical 3.3V power supply for the Ethernet transceiver circuit.

The adapter illustrated in figure 2 comprises an indicator 34, such as a light emitting diode (LED) to indicate the presence of an optic signal (o) in the optic transceiver 26, once the optic transceiver has been connected to the adapter 22, or to indicate the status/operation of the adapter 22. The adapter 22 may additionally or alternatively comprise an acoustic/vibration alarm to indicate that the adapter/arrangement is, for example, not functioning correctly to a user or control system. Furthermore, the adapter 22 or the arrangement 28 may be arranged to provide information concerning its status/operation. An adapter according to the invention may of course comprise any number of indicators for the same of different types of information.

The adapter 22 may be arranged to transmit electric signals (e) between the optic transceiver 26 and the telecommunications network switch 10 without modification or it may comprise any conventional circuitry that enables electric signals (e) that are transmitted therethrough to be processed or modulated. Electric signals (e) from a network device may for example be de-noised and/or their amplitude, frequency, or phase may be varied as they pass through the adapter 22, before they are transmitted to the electric port 32 of a telecommunications network switch 10.

The use of such an adapter 22 or arrangement 28 allows a user to transform at least one port, i.e. a power port or an electric signal input/output port, of a telecommunications network switch by simply connecting at least one such adapter 22 or arrangement 28 to at least one of the ports 30 of the telecommunications network switch 10.

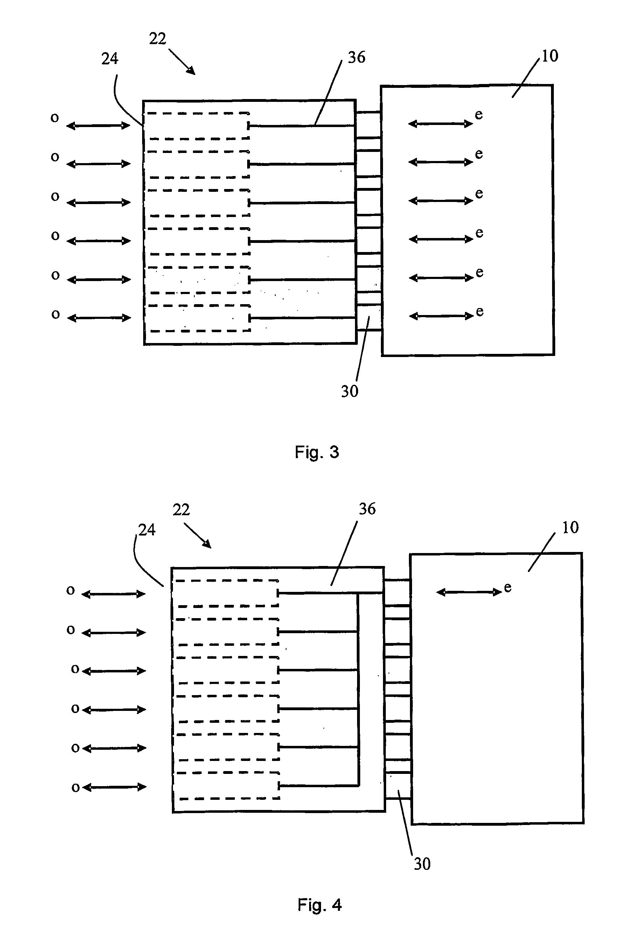

Figure 3 shows an adapter 22 that is connected to a communications network switch 10, viewed from above. The adapter 22 comprises a plurality of first connectors 24 for connecting a plurality of optic transceivers to the adapter 22 and a plurality of second connectors 30 for directly connecting the adapter 22 to a plurality of power ports of a telecommunications network switch 10. It should be noted that the number of incoming/outgoing optic signals need not necessarily be the same as the number of incoming/outgoing electric signals. The adapter 22 illustrated in figure 3 comprises shielded or non-shielded first circuitry 36 to transmit electric signals (e) between each power port of the telecommunications network switch 10 and a corresponding optic transceiver that is electrically connected to each power port via the adapter 22. The illustrated adapter 22 is arranged to accommodate the entire optic transceiver 26 inside the adapter 22. The adapter 22 may therefore function as an interference shield not only to prevent interference between electric conductors of the first circuitry 36 but also to prevent interference between the optic transceiver 26, the first and second circuitry and any other components/devices in the vicinity of the communications network switch 10.

Figure 4 shows an adapter 22 that is connected to a communications network switch 10, viewed from above. The adapter 22 comprises a plurality of first connectors 24 for connecting a plurality of optic transceivers to the adapter 22 and a plurality of second connectors 30 for directly connecting the adapter 22 to a plurality of power ports of a telecommunications network switch 10. The adapter 22 illustrated in figure 4 comprises first circuitry 36 to transmit electric signals (e) between a single power port of a telecommunications network switch 10 and a plurality of optic transceivers that are electrically connected to that power port.

It should be noted that a single adapter may be arranged to contain both the first circuitry 36 shown in figure 3 and the first circuitry 36 shown in figure 4 and it may comprise means to allow a user to select how electric signals are to be transmitted through the adapter 22 depending on the application. A user may for example be given the option of switching between the first circuitry shown in figure 3 and the first circuitry shown in figure 4 and/or he/she may be given the option of connecting/disconnecting various electric signal paths through the adapter 22.

It should be noted that the adapters 22 shown in figures 3 and 4 also comprise second circuitry (not shown) to draw power from one or more power ports of a telecommunications network switch 10, to enable power to be supplied to one or more optic transceivers connected to the adapter 22. A user may be given the option of connecting/disconnecting various power paths through the adapter 22.

Further modifications of the invention within the scope of the claims would be apparent to a skilled person. Even though the claims are directed to an adapter, arrangement and method for transforming at least one electric port of a telecommunications network switch into at least one optic port, at least one optic port of a telecommunications network switch could be transformed into at least one electric port using a suitably modified adapter, arrangement or method according to the present invention.

## Claims

1. Adapter (22) for use in a telecommunications network, such as an Ethernet network, whereby the adapter (22) comprises:
- at least one first connector (24) for connecting at least one optic transceiver (26) to said adapter (22),
- at least one second connector (30) for directly connecting said adapter (22) to at least one power port (32), such as a power-over-Ethernet (PoE) port of a telecommunications network switch (10), such as an Ethernet switch,
- first circuitry (36) arranged to enable electric signals (e) to be transmitted between said at least one optic transceiver (26) and said at least one power port (32), and
- second circuitry (37) arranged to enable power (P) to be drawn from said at least one power port (32) of said telecommunications network switch (10), to enable power (P) to be supplied to said at least one optic transceiver (26),
whereby the adapter (22) is arranged to enable electric power (P) and electric signals (e) to be transmitted simultaneously therethrough,
**characterized in that** said at least one second connector (30) is arranged to releasably directly connect said adapter (22) to said at least one power port (32) of a telecommunications network switch (10).

2. Adapter (22) according to claim 1, **characterized in that** said at least one power port (32) is a registered jack port, such as an RJ11, RJ14 or RJ45 port.

3. Adapter (22) according to claim 1 or 2, **characterized in that** said at least one first connector (24) is arranged to releasably connect said at least one optic transceiver (26) to said adapter (26).

4. Adapter (22) according to any of the preceding claims, **characterized in that** said at least one first connecter (24) is arranged for connecting at least one optic transceiver (26) in the form of a Gigabit Interface Converter (GBIC) or a Small-Form factor-Pluggable (SFP) module to said adapter (22).

5. Adapter (22) according to any of the preceding claims, **characterized in that** it comprises at least one indicator (34) to indicate the presence of an optic signal (o) in said at least one optic transceiver (26) when said at least one optic transceiver (26) is connected to said adapter (22).

6. Adapter (22) according to any of the preceding claims, **characterized in that** it comprises at least one indicator (34) to indicate the status/operation of the adapter (22).

7. Adapter (22) according to claim 5 or 6, **characterized in that** said at least one indicator (34) comprises a light emitting diode (LED) and/or an acoustic/vibration alarm and/or means to provide information.

8. Adapter (22) according to any of the preceding claims, **characterized in that** said first circuitry (36) is arranged to process or modulate electric signals (e) that are transmitted therethrough, for example to de-noise or vary the amplitude, frequency, or phase of said electric signals (e).

9. Adapter (22) according to any of the preceding claims, **characterized in that** it comprises a plurality of said first connectors (24) and/or a plurality of said second connectors (30).

10. Adapter (22) according to claim 9, **characterized in that** it comprises first circuitry (36) that is arranged to transmit a signal from one power port (32) of a telecommunications network switch (10) to a plurality of optic transceivers (26) and/or first circuitry (36) that is arranged to transmit a signal from one optic transceiver (26) to a plurality of power ports (32) of a telecommunications network switch (10).

11. Adapter (22) according to any of the preceding claims, **characterized in that** it is arranged to accommodate the at least part of the at least one optic transceiver (26) inside the adapter (22).

12. Arrangement (28) for use in a telecommunications network, such as an Ethernet network, **characterized in that** it comprises an adapter (22) according to any of the preceding claims to which an optic transceiver (26), such as a Gigabit Interface Converter (GBIC) or a Small-Form factor-Pluggable (SFP) module, is releasably or non-releasably connected.

13. Method for allowing a user to transform at least one electric power port (32) of a telecommunications network switch (10), such as a power-over-Ethernet (PoE) port of an Ethernet switch, into at least one optic port, **characterized in that** it comprises the step of:
• connecting at least one adapter (22) according to any of claims 1-11 or an arrangement (28) according to claim 12 to said at least one power port (32) of a telecommunications network switch (10).

14. Method for allowing a user to transform at least one electric signal input/output port of a telecommunications network switch (10), such as an Ethernet switch, into at least one optic signal input/output port, **characterized in that** it comprises the step of:
• connecting at least one adapter (22) according to any of claims 1-1 or an arrangement (28) according to claim 12 to at least one electric signal input/output port of a telecommunications network switch (10).

## Patentansprüche

1. Ein Adapter (22) zur Verwendung in einem Telekommunikationsnetzwerk wie beispielsweise einem Ethernet Netzwerk, wobei der Adapter (20) umfasst:
- zumindest eine erste Verbindungseinheit (24) zum Verbinden von zumindest einem optischen Transceiver (26) mit dem Adapter (22),
- zumindest eine zweite Verbindungseinheit (30) zum direkten Verbinden des Adapters (22) mit zumindest einem Stromanschluss (32), wie beispielsweise einem Power-over-Ethernet (PoE)-Anschluss eines Telekommunikationsnetzwerk-Switches (10), wie beispielsweise einem Ethernet-Switch,
- eine erste Schaltung (36), ausgebildet zum Ermöglichen, dass elektrische Signale (e) zwischen dem zumindest einen optischen Transceiver (26) und dem zumindest einen Stromanschluss (32) gesendet werden, und
- eine zweite Schaltung (37), ausgebildet zum Ermöglichen, dass Leistung (P) von dem zumindest einen Stromanschluss (32) des Telekommunikationsnetzwerk-Switches (10) gezogen wird, zum Ermöglichen, dass Leistung (P) an den zumindest einen optischen Transceiver (26) zugeführt wird, wobei der Adapter (22) zum Ermöglichen ausgebildet ist, dass elektrische Leistung (P) und elektrische Signale (e) gleichzeitig darüber gesendet werden,
**dadurch gekennzeichnet, dass** die zumindest eine zweite Verbindungseinheit (30) zum lösbaren direkten Verbinden des Adapter (22) mit dem zumindest einen Stromanschluss (32) eines Telekommunikationsnetzwerk-Schalters (10) ausgebildet ist.

2. Der Adapter (22) entsprechend Anspruch 1, **dadurch gekennzeichnet, dass** der zumindest eine Stromanschluss (32) ein registrierter Jackanschluss, wie beispielsweise ein RJ11-, RJ14- oder RJ45-Anschluss, ist.

3. Der Adapter (22) entsprechend Anspruch 1 oder 2, **dadurch gekennzeichnet, dass** die zumindest eine erste Verbindungseinheit (24) zum lösbaren Verbinden des zumindest einen optischen Transceivers (26) mit dem Adapter (26) ausgebildet ist.

4. Der Adapter (22) entsprechend einem der vorstehenden Ansprüche, **dadurch gekennzeichnet, dass** die zumindest eine erste Verbindungseinheit (24) zum Verbinden des zumindest einen optischen Transceivers (26) in Form eines Gigabit-Interface-Converter (GBIC) oder eines Small-Form-Factor-Pluggable (SFP)-Moduls mit dem Adapter (22) ausgebildet ist.

5. Der Adapter (22) entsprechend einem der vorstehenden Ansprüche, **dadurch gekennzeichnet, dass** dieser zumindest einen Indikator (34) zum Angeben des Vorhandenseins eines optischen Signals (o) in dem zumindest einen optischen Transceiver (26), wenn der zumindest eine optische Transceiver (26) mit dem Adapter (22) verbunden ist, umfasst.

6. Der Adapter (22) entsprechend einem der vorstehenden Ansprüche, **dadurch gekennzeichnet, dass** dieser zumindest einen Indikator (34) zum Angeben des Status/Betriebs des Adapters (22) umfasst.

7. Der Adapter (22) gemäß Anspruch 5 oder 6, **dadurch gekennzeichnet, dass** der zumindest eine Indikator (34) eine lichtemittierenden Diode (LED) und/oder einen akustischen/Vibrationsalarm und/oder Mittel zum Bereitstellen von Informationen umfasst.

8. Der Adapter (22) entsprechend einem der vorstehenden Ansprüche, **dadurch gekennzeichnet, dass** die erste Schaltung (36) zum Verarbeiten oder Modulieren von elektrischen Signalen (e) ausgebildet ist, welche darüber zum Beispiel zum Entrauschen oder Verändern der Amplitude, Frequenz oder Phase der elektrischen Signale (e) gesendet werden.

9. Der Adapter (22) entsprechend einem der vorstehenden Ansprüche, **dadurch gekennzeichnet, dass** dieser eine Vielzahl der ersten Verbindungseinheiten (24) und/oder eine Vielzahl der zweiten Verbindungseinheiten (30) umfasst.

10. Der Adapter (22) gemäß Anspruch 9, **dadurch gekennzeichnet, dass** dieser eine erste Schaltung (36), welche zum Senden eines Signals von einem Stromanschluss (32) eines Telekommunikationsnetzwerk-Switches (10) an eine Vielzahl von optischen Transceivern (26) ausgebildet ist, und/oder eine erste Schaltung (36), welche zum Senden eines Signals von einem optischen Transceiver (26) an eine Vielzahl von Stromanschlüssen (32) eines Telekommunikationsnetzwerk-Switches (10) ausgebildet ist, umfasst.

11. Der Adapter (22) entsprechend einem der vorstehenden Ansprüche, **dadurch gekennzeichnet, dass** dieser zum Aufnehmen von zumindest einem Teil des zumindest einen optischen Transceivers (26) innerhalb des Adapters (22) ausgebildet ist.

12. Eine Anordnung (28) zur Verwendung in einem Telekommunikationsnetzwerk, wie beispielsweise einem Ethernet-Netzwerk, **dadurch gekennzeichnet, dass** diese einen Adapter (22) entsprechend einem der vorstehenden Ansprüche umfasst, welcher mit einem optischen Transceiver (26) wie beispielsweise einem Gigabit-Interface-Konverter (GBIC) oder einem Small-Form-Factor-Pluggable (SFP)-Modul lösbar oder nicht-lösbar verbunden ist.

13. Ein Verfahren, es einem Anwender zu ermöglichen, zumindest einen elektrischen Stromanschluss (32) eines Telekommunikationsnetzwerk-Switches (10), wie beispielsweise einem Power-over-Ethernet (PoE)-Anschluss eines Ethernet-Switches, in zumindest einen optischen Anschluss zu transformieren, **dadurch gekennzeichnet, dass** dieses den Schritt umfasst:
• Verbinden von zumindest einem Adapter (22) entsprechend einem der Ansprüche 1 bis 11 oder einer Anordnung (28) entsprechend Anspruch 12 mit dem zumindest einen Stromanschluss (32) eines Telekommunikationsnetzwerk-Switches (10).

14. Ein Verfahren, es einem Anwender zu ermöglichen, zumindest einen Eingabe/Ausgabeanschluss eines elektrischen Signals eines Telekommunikationsnetzwerk-Switches (10), wie beispielsweise einem Ethernet-Switch, in zumindest einen Eingabe/Ausgabeanschluss eines optischen Signals zu transformieren, **dadurch gekennzeichnet, dass** dieser den Schritt umfasst:
• Verbinden von zumindest einem Adapter (22) entsprechend einem der Ansprüche 1 bis 11 oder einer Anordnung (28) entsprechend Anspruch 12 mit zumindest einem Eingabe/Ausgabeanschluss eines elektrischen Signals eines Telekommunikationsnetzwerk-Switches (10).

## Revendications

1. Adaptateur (22) destiné à être utilisé sur un réseau de télécommunications tel qu'un réseau Ethernet, l'adaptateur (22) comprenant :
- au moins un premier connecteur (24) destiné à connecter au moins un émetteur-récepteur optique (26) audit adaptateur (22) ;
- au moins un second connecteur (30) destiné à connecter directement ledit adaptateur (22) à au moins un port d'alimentation (32), tel qu'un port d'alimentation via Ethernet (PoE), d'un commutateur de réseau de télécommunications (10), tel d'un commutateur Ethernet ;
- une première circuiterie (36) conçue pour permettre que des signaux électriques (e) soient transmis entre ledit au moins un émetteur-récepteur optique (26) et ledit au moins un port d'alimentation (32) ; et
- une seconde circuiterie (37) conçue pour permettre qu'une alimentation (P) soit tirée dudit au moins un port d'alimentation (32) dudit commutateur de réseau de télécommunications (10), afin de permettre qu'une alimentation (P) soit fournie audit au moins un émetteur-récepteur optique (26) ;
dans lequel l'adaptateur (22) est conçu pour permettre que l'alimentation électrique (P) et les signaux électriques soient transmis simultanément au travers de celui-ci ;
**caractérisé en ce que** ledit au moins un second connecteur (30) est conçu pour connecter directement de manière amovible ledit adaptateur (22) audit au moins un port d'alimentation (32) d'un commutateur de réseau de télécommunications (10).

2. Adaptateur (22) selon la revendication 1, **caractérisé en ce que** ledit au moins un port d'alimentation (32) est un port de connexion normalisé tel que RJ11, RJ14 ou RJ45.

3. Adaptateur (22) selon la revendication 1 ou 2, **caractérisé en ce que** ledit au moins un premier connecteur (24) est conçu pour connecter de manière amovible ledit au moins un émetteur-récepteur optique (26) audit adaptateur (22).

4. Adaptateur (22) selon l'une quelconque des revendications précédentes, **caractérisé en ce que** ledit au moins un premier connecteur (24) est conçu pour connecter au moins un émetteur-récepteur optique (26) audit adaptateur (22) sous la forme d'un convertisseur d'interface Gigabit (BIC) ou d'un module enfichable à faible facteur de forme (SFP).

5. Adaptateur (22) selon l'une quelconque des revendications précédentes, **caractérisé en ce qu'**il comprend au moins un indicateur (34) afin d'indiquer la présence d'un signal optique (o) sur ledit au moins un émetteur-récepteur optique (26) lorsque ledit au moins un émetteur-récepteur optique (26) est connecté audit adaptateur (22).

6. Adaptateur (22) selon l'une quelconque des revendications précédentes, **caractérisé en ce qu'**il comprend au moins un indicateur (34) afin d'indiquer l'état/le fonctionnement de l'adaptateur (22).

7. Adaptateur (22) selon la revendication 5 ou 6, **caractérisé en ce que** ledit au moins un indicateur (34) consiste en une diode électroluminescente (LED) et/ou une alarme acoustique/vibrante et/ou un moyen de fournir des informations.

8. Adaptateur (22) selon l'une quelconque des revendications précédentes, **caractérisé en ce que** ladite première circuiterie (36) est conçue pour traiter ou moduler des signaux électriques (e) qui sont transmis à travers celle-ci, par exemple pour débruiter ou pour modifier l'amplitude, la fréquence ou la phase desdits signaux électriques (e).

9. Adaptateur (22) selon l'une quelconque des revendications précédentes, **caractérisé en ce qu'**il comprend une pluralité desdits premiers connecteurs (24) et/ou une pluralité desdits seconds connecteurs (30).

10. Adaptateur (22) selon la revendication 9, **caractérisé en ce qu'**il comprend une première circuiterie (36) qui est conçue pour transmettre un signal entre un port d'alimentation (32) d'un commutateur de réseau de télécommunications (10) et une pluralité d'émetteurs-récepteurs optiques (26) et/ou une première circuiterie (36) qui est conçue pour transmettre un signal entre un émetteur-récepteur optique (26) et une pluralité de ports d'alimentation (32) d'un commutateur de réseau de télécommunications (10).

11. Adaptateur (22) selon l'une quelconque des revendications précédentes, **caractérisé en ce qu'**il est conçu pour loger au moins une partie dudit au moins un émetteur-récepteur optique (26) à l'intérieur de l'adaptateur (22).

12. Agencement (28) destiné à être utilisé sur un réseau de télécommunications, tel qu'un réseau Ethernet, **caractérisé en ce qu'**il comprend un adaptateur (22) selon l'une quelconque des revendications précédentes, auquel est connecté de manière amovible ou non amovible un émetteur-récepteur optique (26), tel qu'un convertisseur d'interface Gigabit (BIC) ou un module enfichable à faible facteur de forme (SFP).

13. Procédé destiné à permettre à un utilisateur de transformer en au moins un port optique au moins un port d'alimentation électrique (32) d'un commutateur de réseau de télécommunications (10), tel qu'un port d'alimentation via Ethernet (PoE) d'un commutateur Ethernet, **caractérisé en ce qu'**il comprend l'étape consistant à :
• connecter au moins un adaptateur (22) selon l'une quelconque des revendications 1 à 11 ou un agencement (28) selon la revendication 12 audit au moins un port d'alimentation (32) d'un commutateur de réseau de télécommunications (10).

14. Procédé destiné à permettre à un utilisateur de transformer au moins un port d'entrée/sortie de signal électrique d'un commutateur de réseau de télécommunications (10), tel qu'un commutateur Ethernet, en au moins un port d'entrée/sortie de signal optique, **caractérisé en ce qu'**il comprend l'étape consistant à :
• connecter au moins un adaptateur (22) selon l'une quelconque des revendications 1 à 11 ou un agencement (28) selon la revendication 12 audit au moins un port d'entrée/sortie de signal électrique d'un commutateur de réseau de télécommunications (10).
